# DEMANDE DE BREVET EUROPEEN

(11) **EP 2 191 729 A2**
(43) Date de publication de la demande: **02.06.2010**
(21) Numéro de dépôt: 09177244.2
(22) Date de dépôt: 26.11.2009
(51) Int. Cl.: A23C 19/05, A23C 19/055

(54) **Procédé pour moduler la coagulation et la synérèse du lait**

(30) Priorité: 27.11.2008 FR 0858049
(71) Demandeur: Nexidia, 21000 Dijon (FR)
(72) Inventeur: Guzzo, Jean, 21121 Fontaine Les Dijon (FR); Desroche, Nicolas, 21121 Fontaine Les Dijon (FR); Quatravaux, Sylvaine, 21850 Saint Apollinaire (FR); Arbault, Patrice, 69530 Orlienas (FR)
(74) Mandataire: Tetaz, Franck Claude Edouard

(57) **Abrégé**

La présente invention concerne un procédé pour favoriser la coagulation et la synérèse du lait, **caractérisé en ce que** l'on ajoute dans le lait une protéine dite « Heat shock protein » (Hsp) préalablement à la coagulation. Ce procédé est particulièrement utile pour la production de caillé de lait, de lactosérum et de fromage.

## Description

### DOMAINE DE L'INVENTION

La présente invention concerne un procédé pour favoriser la coagulation et la synérèse du lait, dans lequel on ajoute dans le lait une protéine appartenant à la famille des « Heat shock proteins » (Hsp) préalablement à la coagulation. Ce procédé est particulièrement utile pour la production de caillé de lait, de lactosérum et de fromage.

### ARRIERE PLAN DE L'INVENTION

La fabrication des fromages repose sur l'action combinée de bactéries lactiques et de la présure sur les constituants du lait. Le résultat est la transformation du lait liquide en un gel plus ou moins solide et compact (caillé laitier). Le processus de fabrication d'un fromage se décompose en trois étapes successives : la coagulation, l'égouttage et l'affinage. Seules les étapes de coagulation et d'égouttage sont obligatoires, l'affinage n'intervient que lors de la fabrication de produits maturés.

Dans un premier temps, les fromagers procèdent à la préparation du lait qui comprend éventuellement une phase de traitement thermique selon le type de fromage et/ou un ajustement des taux de matières grasses et protéiques selon la composition initiale du lait et les modalités de fabrication du fromage auquel le lait est destiné.

La première étape consiste à provoquer la coagulation du lait par la déstabilisation des micelles de caséine du lait. Cette coagulation est préférentiellement réalisée par deux principaux modes d'action distincts dont le dosage va conditionner les propriétés rhéologiques du produit final :
- La voie fermentaire à l'aide de bactéries lactiques (flore indigène du lait ou apportées sous forme de ferments lactiques). L'acidification liée à l'activité bactérienne entraîne la neutralisation des charges micellaires périphériques négatives et provoque la déstabilisation de la micelle puis la floculation ;
- La voie enzymatique à l'aide d'enzymes coagulantes, en particulier la présure. La présure est constituée en majorité de chymosine. Cette enzyme possède une double activité : une activité sur le site 105-106 du caséinomacropeptide permettant la coagulation du lait et une activité mineure de protéolyse générale sur les différentes fractions caséiniques. L'activité coagulante de la présure est fortement influencée par les facteurs de milieu. L'activité coagulante de la présure sur le lait est réalisée à un pH voisin de 5,5 et la température optimale se situe à 40-42° C. Le temps de coagulation est ainsi souvent dirigé par la maîtrise précise des températures lors de cette étape. La résultante de la coagulation est la formation d'un gel (le caillé).

Les mécanismes d'action de deux agents coagulants (ferments lactiques ou présure) au niveau de la micelle sont très différents. Bien qu'ils conduisent tous deux à la formation d'un coagulum (gel ou caillé), les propriétés rhéologiques de ce dernier sont déterminées par le mode de coagulation.

L'aptitude à l'égouttage, dont dépendent les caractéristiques physico-chimiques du fromage non affiné, est également déterminée de façon spécifique. Les gels obtenus par voie acide présentent des micelles associées en amas qui s'égouttent spontanément mais lentement et incomplètement.

Au contraire, les gels formés par voie enzymatique sont élastiques et peu friables; leur raffermissement est rapide et important mais leur imperméabilité est forte, rendant l'égouttage spontané difficile. Par contre, par des actions physiques et chimiques adéquates (chauffage, tranchage ou pressage du caillé), il est possible de provoquer une rapide et importante expulsion de lactosérum.

Dans les techniques fromagères classiques, les deux modes de coagulation ne sont jamais utilisés séparément, seule varie l'importance relative de leur action coagulante respective. Selon le mode de coagulation utilisé, le fromager orientera le procédé de fabrication vers trois grandes catégories distinctes de fromages : les fromages à pâte fraîche qui résultent d'une coagulation à caractère lactique prédominant ; les fromages à pâte pressée qui résultent d'une coagulation à caractère présure prédominant ; les fromages à pâte molle qui résultent d'une coagulation à caractère mixte.

La deuxième étape, dite d'égouttage, permet la séparation du caillé (phase solide) et du lactosérum (composé d'eau et de matières solubles comme le lactose, les sels minéraux et les protéines solubles). La synérèse correspond à l'expulsion active d'une partie du lactosérum contenu par contraction du gel, associée à un processus passif résultant de la porosité et de la perméabilité du caillé. Ce processus détermine précisément les propriétés rhéologiques et les qualités organoleptiques et cette étape nécessite un important savoir-faire de la part du fromager.

La quantité de matière sèche conservée dans le fromage après égouttage est caractéristique d'un type de fromage donné et c'est sur ce point en particulier que la technologie fromagère peut intervenir pour permettre l'augmentation du rendement fromager, c'est-à-dire permettre lors de la phase d'égouttage du gel laitier de conserver une fraction plus importante des protéines évacuées dans le lactosérum.

En pratique fromagère, le fromager suit très précisément l'évolution de la fermeté du caillé afin de déterminer le déclenchement de l'égouttage. Si celui-ci est démarré trop tôt, le gel ne sera pas suffisamment structuré et le caillé perdra des quantités importantes de matière sèche. A l'inverse, si l'égouttage intervient tardivement, cela réduira les risques de pertes de matière sèche dans le lactosérum, mais entraînera à la fois une perte de temps et un risque d'excès d'acidification du coagulum préjudiciable à la qualité ultérieure de l'égouttage, et à celle du fromage.

En général la fabrication d'un fromage maturé se termine par un affinage, stade ultime du processus précédé par un salage qui complète l'égouttage et permet la formation de la croûte.

La maîtrise des temps technologiques est au coeur du procédé fromager. Le fromager doit pouvoir ajuster son temps de coagulation et d'égouttage et le faire varier facilement ;
- soit pour passer des produits de technologie différente sur une même ligne;
- soit pour ajuster ce temps de synérèse en fonction des variations journalières d'une même technologie et des variation saisonnières de qualité du lait.

De nombreux facteurs en interaction permettent de moduler la synérèse. Tout d'abord il faut préciser que la capacité d'égouttage et/ou de synérèse d'un caillé est directement dépendante de son mode de coagulation. En effet la capacité d'égouttage d'un fromage est le résultat d'une interaction progressive et continue entre les caséines du lait. Plus les micelles de caséines sont de taille importante, plus la porosité et la perméabilité augmentent facilitant la synérèse.

Trois facteurs influencent favorablement l'égouttage ou la synérèse:
- la dose de présure;
- la température ;
- le taux de calcium qui peut accentuer la contraction du gel par la déstabilisation des micelles de caséine.

Néanmoins la température et le taux de calcium ont d'autres conséquences négatives sur la qualité du produit final selon les technologies fromagères. L'acidification du caillé doit être également correctement maîtrisée afin d'éviter un excès d'acidité aboutissant à un caillé trop friable.

Pour les fromages à pâte pressée ou dure, l'optimisation des rendements fromagers nécessite de réincorporer au fromage les protéines solubles recyclées à partir de protéines du lactosérum que l'on fait précipiter ou agréger afin de les rendre insolubles. L'augmentation de la matière protéique a alors un effet négatif sur l'égouttage par fixation de l'eau par les protéines hydrophiles du sérum.

L demande de brevet US 2005/0158423 décrit un procédé pour améliorer la fermentation du lait, en particulier pour la fabrication de fromage, dans lequel on ajoute au lait à fermenter des bactéries mutantes qui produisent des « small heat shock protein ». Ces protéines dites « Heat shock protein » ne sont pas mises en contact avec les constituants du lait mais sont produites dans les bactéries afin qu'elles puissent supporter des conditions de culture stressantes comme des conditions de température élevée, de pH ou de salinité différentes. La production de ces protéines permet d'améliorer la croissance des bactéries qui les produisent lors de fermentation menées à des températures élevées.

La publication de Manso & a/ (International Diary Journal 15 (2005) 845-855) décrit pour sa part une analyse protéomique du lait et des produits laitiers. II y est mentionné que des « Heat shock protein » de haut poids moléculaire sont produites par les bactéries thermophiles et sont libérées suite à la lyse spontanée des bactéries en fin de maturation lorsque le caillé laitier est déjà établi.

La présente invention permet un meilleur contrôle de la coagulation et de la synérèse, pour la préparation de caillé, pour l'obtention de lactosérum et en particulier dans la fabrication du fromage.

### BREVE DESCRIPTION DE L'INVENTION

La présente invention concerne un procédé pour moduler la coagulation et la synérèse du lait, dans lequel on ajoute dans le lait une protéine appartenant à la famille des « Heat shock proteins » (Hsp) préalablement à la coagulation.

De manière avantageuse, la protéine dite « Heat shock protein » est choisie parmi les protéines « Heat shock proteins » de faible masse moléculaire (small Hsp) sous forme monomérique ou multimérique. Selon un mode préférentiel la protéine « Heat shock protein » de faible masse moléculaire comprend l'assemblage de 10 à 20 sous unités, plus préférentiellement la protéine Lo18.

Les protéines « Heat shock protein » et plus particulièrement les Hsp de faible masse moléculaire utilisées dans le procédé selon l'invention sont isolées à partir de cellules procaryotes ou eucaryotes.

Selon un mode avantageux de réalisation de l'invention, la protéine « Heat shock protein » est ajoutée au lait sous forme d'un extrait protéique purifié, en particulier choisi parmi les formes liquides, congelées, déshydratées et lyophilisées.

L'homme du métier saura déterminer la quantité de protéine dite « Heat shock protein » dans le procédé de coagulation selon l'invention en fonction du but recherché et en fonction du mode de coagulation employé, en particulier la voie fermentaire, la voie enzymatique et leurs combinaisons. La quantité de protéine ajoutée au lait va préférentiellement de 0,6 à 450 mg d'extrait protéique purifié par litre de lait.

L'invention concerne aussi un procédé de préparation d'un sérum de lait comprenant une étape de coagulation, une étape de séparation du sérum et du caillé et une étape de récupération du sérum, dans lequel la coagulation est modulée par l'ajout d'une protéine dite « Heat shock protein » tel que définie ci-dessus et ci-après.

L'invention concerne également un procédé de préparation d'un caillé de lait comprenant une étape de coagulation, une étape de séparation du caillé et du sérum et une étape de récupération du caillé, dans lequel la coagulation est modulée par l'ajout d'une protéine dite « Heat shock protein » tel que définie ci-dessus et ci-après.

L'invention concerne aussi un procédé de préparation d'un fromage, comprenant une étape de préparation d'un caillé de lait et une étape d'égouttage du caillé, dans lequel on prépare le caillé par le procédé défini précédemment et ci-après. Dans un mode préféré de réalisation du procédé de préparation d'un fromage selon l'invention, le caillé égoutté est ensuite affiné.

L'invention concerne également un fromage obtenu par le procédé selon l'invention, tel que défini ci-dessus et ci-après.

### DESCRIPTION DETAILLEE DE L'INVENTION

La présente invention concerne un procédé pour moduler la coagulation et la synérèse du lait, dans lequel on ajoute dans le lait une protéine dite « Heat shock protein » (Hsp) préalablement à la coagulation, en particulier dans un procédé de préparation de fromage.

Par « moduler » ou « modulation », on entend selon l'invention, un moyen d'agir tant sur la composition respective du caillé et du sérum que sur la capacité du caillé à expulser le sérum rapidement et de façon plus importante.

Cette modulation dépendra en particulier de la composition du lait, de la méthode de coagulation employés et de la quantité de protéine dite « Heat shock protein » (Hsp).

De manière avantageuse, le lait employé dans la méthode selon l'invention est un lait de mammifère, et plus particulièrement un lait de mammifère terrestre, préférentiellement d'élevage, en particulier choisis parmi les bovins, les ovins et les caprins. De manière préférée, le lait est un lait de vache, de bufflonne, de chèvre ou de brebis, plus préférentiellement de vache.

Le lait employé dans le procédé selon l'invention peut être un lait ayant subi un prétraitement, et notamment un prétraitement thermique préalablement à la phase de coagulation ou une modification du taux de protéines ou de matières grasses.

La méthode de coagulation employée dans le procédé selon l'invention est avantageusement choisie parmi la voie fermentaire, la voie enzymatique et leurs combinaisons.

Les protéines dites « Heat shock protein » sont bien connues de l'homme du métier. Tous les organismes synthétisent un ensemble de protéines en réponse à des stress environnementaux. D'une façon générale, ces protéines sont appelées « protéines de chocs thermiques » (Hsp pour Heat shock protein) en raison de leur première identification après un choc thermique (Watson, 1990). Parmi ces protéines, certaines sont de faibles masses moléculaires et appartiennent à la très large famille des smHsp pour « Small heat shock protein ». La séquence en acides aminés des smHsp est peu conservée. Ces protéines présentent une masse moléculaire de 15 à 42 kDa. Elles se distinguent néanmoins par une séquence de 100 acides aminés caractéristique des protéines de l' α-cristallin de l'oeil des vertébrés appelée domaine de l'α-cristallin.

Les smHsp ont été étudiées principalement chez les mammifères et les plantes. *In vitro*, les smHsp sont capables de se lier à des polypeptides en cours de dénaturation, d'empêcher leur agrégation irréversible et par conséquent de les maintenir dans un état compatible avec leur repliement. Dans certains cas précis, il a été démontré que la smHsp peut participer au repliement d'une protéine native si elle est assistée par d'autres chaperons moléculaires comme les Hsp70 (Lee et Vierling, 2000). Bien que l'acquisition d'une thermotolérance par une souche d'*Escherichia coli* surproduisant une smHsp de plante ait été montrée (Yeh et al. 1997 ; Soto et al. 1999), le rôle des smHsp dans la cellule n'est pas encore clairement élucidé.

Une caractéristique commune des smHsp est leur assemblage en une structure multimérique. La taille des multimères est variable selon les organismes. Chez les bactéries, les complexes multimériques vont de 150 à 600 kDa. Une structure définie de l'oligomère a été élucidée pour certaines smHsp. C'est le cas en particulier de l'Hsp16.3 de *Mycobacterium tuberculosis* qui se présente sous forme sphérique avec 12 sous unités organisées en symétrie tétraédrique (Kennaway et al. 2005). Deux smHsp bactériennes d'organismes différents semblent s'associer en des multimères composés de 24 sous unités : l'Hsp 16.5 de l'archaebactérie *Methanococcus jannashii* (Kim et al. 1998 ; Koteiche et al. 2005) et l'Hsp 26 de la levure *Saccharomyces cerevisiae* (White et al.2006). En revanche pour les smHsp modèles de l'α-cristallin de l'oeil, la taille de l'oligomère peut fluctuer avec des complexes de plus de 50 sous unités (Aquilina et al. 2005). Dans tous ces cas, une activité de chaperon moléculaire a été démontrée *in vitro.* Des smHsp ont été identifiées dans les génomes bactériens de nombreuses espèces telles que les Bifidobactéries, les bactéries lactiques comme *Lactobacillus* ou *Lactococcus* (Wouters et al. 1998 ; Spano et al. 2005).

La smHsp de 18 kDa appelée Lo18 a fait l'objet d'une étude approfondie. Il s'agit d'une smHsp induite par de multiples stress (thermique, acide, présence d'éthanol et de sulfites, ...) et produite par la bactérie lactique du vin, *Oenococcus oeni* (Guzzo et al.1997). Une fraction de la protéine est associée de façon périphérique à la membrane lors d'un choc thermique de 30°C à 42°C (Jobin et al.1997). Le taux de protéines associées à la membrane dépend de l'amplitude du choc de température. Ainsi à 46°C, Lo18 est préférentiellement retrouvée en association avec la membrane (Delmas et al.2001).

Des études biochimiques ont permis de montrer que Lo18 est capable de s'organiser en tétramère de trimères *in vitro* et des structures équivalentes ont été mises en évidence *in vivo* lors d'expériences de cross-linking (Delmas et al. 2001). Lo18 possède une activité de chaperonne ATP-indépendante : elle est capable de protéger des substrats modèles de l'agrégation thermique et ce jusqu'à au moins 60°C. Récemment il a été démontré que cette smHsp avait également une activité de lipochaperon. L'incubation de la protéine Lo18 purifiée avec des liposomes constitués à partir de lipides isolés de la bactérie lactique *O*. *oeni* a permis d'observer par la méthode d'anisotropie de fluorescence une réduction de la mobilité des chaînes d'acides gras à partir de 40°C. Ce résultat témoigne d'un effet rigidifiant sur la membrane en présence de la protéine à haute température. L'utilisation sur le même modèle (liposomes en présence de Lo18) d'une sonde Laurdan qui permet d'évaluer l'état physique de la membrane a conforté l'idée d'un effet direct de Lo18 sur les phospholipides : cet effet se caractérise par une augmentation de l'ordre des molécules d'acides gras pour une température supérieure à 40°C (Coucheney et coll, 2005). D'autres caractéristiques du procédé selon l'invention sont décrites dans les exemples particuliers de réalisation ci-après, par référence aux figures annexées.

La Figure 1 représente des gels laitiers réalisés en absence ou en présence de Lo18 après 24 h (gauche) ou 48 h (droite) à 30 °C.

La Figure 2 représente la mesure de la masse de sérum expulsée de gels témoins ou contenant Lo18 après centrifugation douce (10 min, 1000 *g*, 10 °C) après différents temps d'incubation dans un modèle de coagulation *in vitro.*

La Figure 3 représente de manière schématique les principales phases de la fabrication d'un fromage et l'optimisation de certaines étapes par l'incorporation de la protéine Lo18.

### I. Méthode de production et de purification de la smHsp Lo18

Le gène *hsp18* de *O*. *oeni* codant pour la protéine Lo18 a été cloné dans un vecteur d'expression. La production de la protéine Lo18 est réalisée dans un système hétérologue. La purification de cette protéine est basée sur une lyse des cellules surproduisant la protéine et sur une séparation par chromatographie d'interactions hydrophobe. La méthode utilisée est publiée dans Coucheney, F., Gal, L., Beney, L., Lherminier, J., Gervais, P. and Guzzo Jean. (2005). A small HSP, Lo18 interacts with the cell membrane and modulates lipid physical state under heat shock conditions in a lactic acid bacterium. Biochim Biophys Acta. 1720: 92-8.

L'utilisation de protéines dites « Heat shock proteins » telles que définies précédemment, en particulier la smHsp Lo18 comme additif permet la réalisation d'un gel laitier lors de la fabrication d'un produit laitier de type lait fermenté, fromage et yaourt. L'ajout de la smHsp lors de la formation du caillé a pour effet d'accélérer la prise en gel (coagulation), d'augmenter la contractilité du gel et d'augmenter la vitesse de synérèse avec une répercussion positive sur la fermeté du gel laitier (texture, viscoélasticité).

### II. Effet de l'ajout de Lo18 sur les propriétés rhéologiques des gels contenant Lo18

L'application de techniques de rhéologie dynamique a permis de démontrer l'effet de l'ajout de Lo18 sur le temps de gélification relatif du lait en présence de présure.

La méthodologie a consisté à mesurer à l'aide d'un viscoélasticimètre le temps nécessaire à la prise en gel d'un caillé laitier chimique. Les conditions expérimentales appliquées sont les suivante : mesure du temps de gélification de 4,5 mL de lait Low Heat 80 additionné de 0,5 mL de tampon Na-phosphate 50 mM pH 7,0 contenant ou non la protéine Lo18 (concentration finale : 0,45 g/L soit 26 µM) et de 3 µL de présure (concentration finale : 23 µM).

Les résultats obtenus montrent que l'ajout de Lo18 réduit significativement le temps de prise en gel. Le gain de temps est de l'ordre de 20% dans nos conditions expérimentales.

### III. Effet de l'ajout de Lo18 sur la capacité de rétractation spontanée des gels

Le test mis en oeuvre permet de mesurer la résistance à la synérèse de gels centrifugés à faible vitesse. La méthodologie a consisté à incuber un lait modèle avec de la présure, en présence de la protéine Lo18 (concentration finale : 0,45 g/L) ou d'une protéine témoin : l'albumine sérique bovine (ASB) à la même molarité. Après différents temps d'incubation à 30°C, le gel laitier obtenu est homogénéisé et centrifugé. Un volume de gel de 1mL est suffisant pour avoir une bonne reproductibilité et observer des différences significatives.

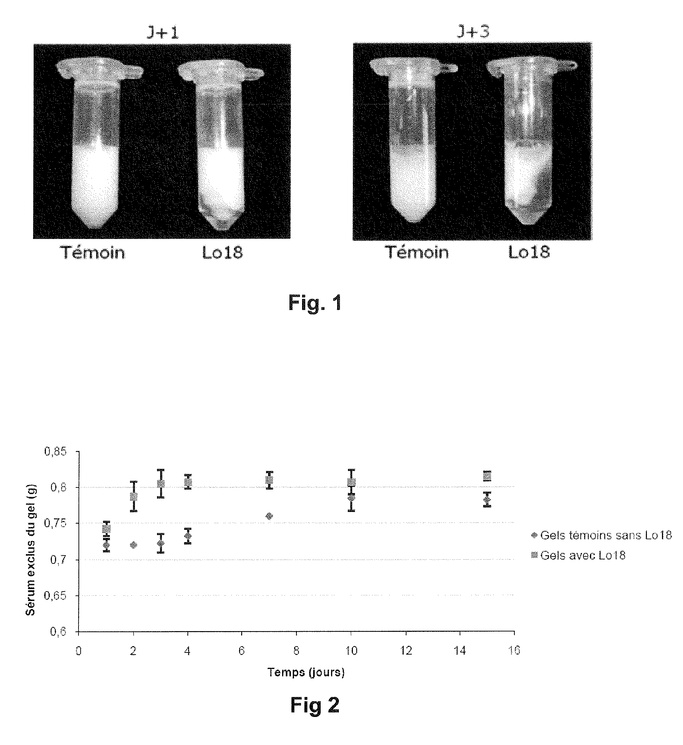

L'ajout de Lo18 a pour effet de favoriser la synérèse avec l'obtention d'un gel laitier très contractile. La différence est significative dès 24 h d'incubation (Figure 1). Ces observations sont confirmées par les mesures de masse de lactosérum expulsé des gels (Figure 2). Avec l'ajout de Lo18, la synérèse est bien plus prononcée et ce dès le premier jour et jusqu'au dernier jour du test. La différence est maximale au troisième jour. Cet effet est spécifique de la protéine Lo18. La même expérience conduite avec ajout d'ASB n'a aucun effet sur la synérèse.
Des essais ont été menés en diminuant la quantité de Lo18 ajoutée et en mesurant la masse de sérum exclu du gel après trois jours d'incubation où la différence est la plus marquée. L'action de Lo18 sur la synérèse est alors marquée après trois jours d'incubation pour une concentration de 0,6 mg/L.

Les résultats confirment l'hypothèse selon laquelle Lo18 interagit avec les micelles de caséines favorisant leur rapprochement lors de la formation du gel. Ainsi, en présence de Lo18, une rétractation plus homogène du réseau de caséines peut stabiliser et renforcer le réseau et faciliter l'expulsion du lactosérum hors du gel favorisant une synérèse spontanée.

### IV. Avantages techniques et économiques de l'invention proposée par rapport à l'art antérieur

L'utilisation de Lo18 lors de la fabrication de fromages peut permettre:
- de faire varier les doses de présure. Les conséquences seront de diminuer le nombre de caséines hydrolysées, de modifier la densité du gel, et de faire varier la contractilité lors de la coagulation ;
- de mieux maîtriser dans le temps la synérèse en accélérant le processus d'égouttage ou de synérèse ;
- de générer un gel laitier de texture innovante débouchant sur de nouveaux produits par exemple des fromages plus secs, donc plus faciles à conserver et plus doux.
- de modifier, pour les fromages à pâte dure et certains fromages à pâte pressée, le traitement thermique du lait (augmentation de la température et de la durée de traitement) de façon à augmenter la quantité de protéines sériques incorporées sans diminution des capacités de synérèse ni prolongement de l'égouttage.

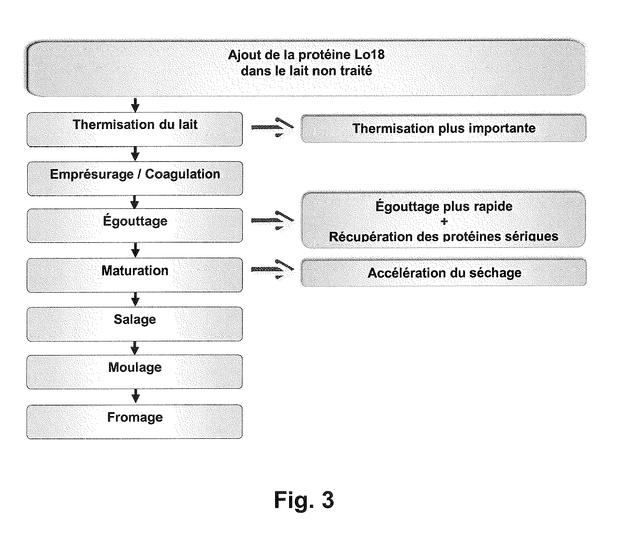

Dans ces conditions, les protéines dites « Heat shock proteins » et plus particulièrement la protéine Lo18, parmi les protéines dites « Heat shock proteins » de faible masse moléculaire, présentent un intérêt multiple pour des applications potentielles en technologie fromagère (Figure 3).

### V. Formulation et quantités à utiliser

Nous préconisons un ajout de la protéine soit sous forme liquide conservation à 4°C ou sous forme congelée. Des essais de conservation menés sur des lots différents de protéine Lo18 purifiée ont permis de montrer sa stabilité lors d'une congélation à -20°C ou -80°C sans ajout d'additifs. Une formule sous forme lyophilisée ou déshydratée est également envisageable (poudre).

Selon utilisation de 0,6 mg/L à 0,45 g/L. Elle présente un effet sur la synérèse de caillés laitiers de type enzymatique dès que l'on atteint une concentration de 0,6 mg/L.

### VI. Références

1. Adler, G.M., Austen, B.M., Bashford, C.L., Mehlert, A., Pasternak, C.A. 1990. Heat shock proteins induce pores in membranes. Biosciences Reports. 10: 509-518.
2. Aquilina, J.A., Benesh, J.L., Ding, L.L., Yaron, O., Horwitz, J., Robinson, C.V. 2005. Subunit exchange of polydisperse proteins: mass spectrometry reveals consequences of alphaA-crystallin truncation. J. Biol. Chem. 280: 14485-14491.
3. Beltramo, C., Desroche, N., Tourdot-Maréchal R., Grandvalet C. and Guzzo J. 2006. Real-time PCR for characterizing the stress response of Oenococcus oeni in a wine-like medium. Research in Microbiology. 157: 267-274.
4. Coucheney, F., Gal, L., Beney, L., Lherminier, J., Gervais, P., and Guzzo Jean. 2005. A small HSP, Lo18 interacts with the cell membrane and modulates lipid physical state under heat shock conditions in a lactic acid bacterium. Biochim Biophys Acta. 1720: 92-8.
5. Delmas, F., Diviès, C. and Guzzo, J. 2001. In vitro and in vivo studies of the membrane associated small heat shock protein Lo18 from the lactic acid bacterium Oenococcus oeni. J. Mol. Microbiol.Biotechnol. 3 : 601-610.
6. Delmas, F., Diviès, C. and Guzzo, J. 2000. Etudes biochimiques et physiologiques d'une Hsp de faible poids moléculaire d'une bactérie lactique. Int. J. Food. Sciences. 20. 111-117.
7. Desroche, N., C. Beltramo and Guzzo J. 2005. Determination of an internal control to apply reverse transcription quantitative PCR to study stress response in the lactic acid bacterium Oenococcus oeni. J. Microbiol. Methods. 60: 325-333.
8. Giese, K.C., Vierling, E. 2004. Mutants in a small heat shock protein that affect oligomeric state. Analysis and allelle-specific suppression. J. Biol. Chem. 279: 32674-83.
9. Guzzo, J., Delmas, F., Pierre, F., Jobin, M.P., Samyn, B., Van Beeumen, J., Cavin, J.F. and Diviès, C. 1997. A small heat shock protein from Leuconostoc oenos induced by multiples stresses and during stationary growth phase. Lett. Appl. Microbiol. 24: 393-396.
10. Guzzo, J., Coucheney, F., Pierre, F., Fortier, L-C., Delmas, F., Divies, C., and Tourdot-Maréchal, R. 2002. Acidophilic behaviour of the malolactic bacterium Oenococcus oeni. Int. J. Food. Sciences. 22 : 107-111.
11. Guzzo, J., M.P. Jobin. and C. Diviès. 1998. Increase of sulfite tolerance in Oenococcus oeni by means of acidic adaptation. FEMS. Microbiol. Lett. 160 : 43-47.
12. Horvath, I., Glatz, A., Varvasovszki, V., Torok, Z., Pali, T., Balogh, G., Kovacs, E., Nadasdi, L., Benko, S., Joo, F., Vigh, L. 1998. Membrane physical state control the signaling mechanism of the heat shock response in Synechocistis PCC 6803: Identification of hsp17 as a "fluidity gene". PNAS. 95: 3513-3518.
13. Jobin, M.P., Delmas, F., Garmyn, D., Diviès, C. and Guzzo, J. 1997. Molecular characterization of the gene encoding an 18-kilodalton small heat sock protein associated with the membrane of Leuconostoc oenos. Appl. Environ. Microbiol. 63: 609-614.
14. Jobin, M. P., F. Delmas, D. Garmyn, C. Diviès et J. Guzzo. 1998. Caractérisation des protéines de choc thermique de faible poids moléculaire chez les bactéries lactiques. Le Lait. 78 : 165-171.
15. Kennaway, C.K., Benesch, J.L., Gohlke, U., Wang, L., Robinson, C.V., Orlova, E.V. 2005. Dodecameric structure of the small heat shock protein Acr1 from Mycobacterium tuberculosis. J. Biol. Chem. 280: 33419-33425.
16. Kim, R., Kim, K.K., Yokota, H. and Kim, S.H. 1998. Small heat shock protein of Methanococcusjannaschii, a hyperthermophile. Proc. Natl. Acad. Sci. 95: 9129-9133.
17. Koteiche, H.A., Chiu, S., Majdoch, R.L., Stewart, P.L., Mchaourab, H.S. 2005. Atomic models by cryo-EM and site-directed spin labeling: apllication to the N-terminal region of Hsp 16.5. Structure. 13: 1165-1171.
18. Lanneau, D., De Thonel, A., Maurel, S., Didelot, C., and Garrido, C. 2007. Apoptosis versus cell differentiation: role of heat shock proteins HSP90, HSP70 and HSP27. Prion. 1: 53-60, 2007.
19. Lee, G.J. and Vierling, E. 2000. A small Heat Shock Protein cooperates with Heat Shock Protein 70 systems to reactivate a heat-denatured protein. Plant Physiol. 122: 189-198.
20. Lentze, N., Studer, S., Naberhaus, F. 2003. Structural and functional defects caused by point mutations in the alpha-crytallin domain of a bacterial alpha-heat shock protein. J. Mol. Biol. 328: 927-37.
21. Michelini, E.T. and Flynn, G.C. 1999. The unique operon of Thermotoga maritima: cloning and initial characterization of a functional Hsp70 and small heat shock protein. J. Bacteriol. 181: 4237-4244.
22. Morel, F., Delmas, F., Jobin, M.-P., Diviès, C. and Guzzo, J. 2001. Improved acid tolerance of a recombinant strain of Escherichia coli expressing genes from the acidophilic bacterium Oenococcus oeni. Lett. Appl. Microbiol. 33 : 1-5.
23. Roy, S.K., Hiyama, T. and Nakamoto, H. 1999. Purification and characterization of the 16-kDa heat-shock-responsive protein from the thermophilic cyanobacterium Synechococcus vulcanus, which is an -crystallin-related, small heat shock protein. Eur. J. Biochem. 262: 406-416.
24. Spano, G., L. Beneduce, C. Perrotta and S. Massa. 2005. Cloning and characterization of the hsp 18.55 gene, a new member of the small heat shock gene family isolated from wine Lactobacillus plantarum. Res Microbiol 156(2): 219-24.
25. Soto, A., Allona, I., Collada, C., Guevara, M.A., Casado, R., Rodriguez-Cerezo, E., Aragoncillo, C. and Gomez, L. 1999. Heterologous expression of a plant small heat-shock protein enhances Escherichia coli viability under heat and cold stress. Plant. Physiol. 120: 521-528.
26. Yeh, C.H., Chang, P.F.L., Yeh, K.W., Lin, W.C., Chen, Y.M. and Lin, C.Y. 1997. Expression of a gene encoding a 16.9-kDa heat-shock protein, Oshsp 16.9, in Escherichia coli enhances thermotolerance. Proc. Natl. Acad. Sci. 94: 10967-10972.
27. Watson, K. 1990. Microbial stress proteins. Adv. Micobial. Physiol. 31: 183-223.
28. White, H.E., Orlova, E.V., Chen, S., Wang, L., Ignatiou, A., Gowen, B. 2006. Multiple distinct assemblies reveal conformational flexibility in the small heat shock protein Hsp 26. Structure. 14: 1197-1204.
29. Wouters, J. A., J. W. Sanders, J. Kok, W. M. de Vos, O. P. Kuipers and T. Abee. 1998. Clustered organization and transcriptional analysis of a family of five csp genes of Lactococcus lactis MG1363. Microbiology 144 ( Pt 10): 2885-93.
30. Zapparoli, G., Moser, M., Dellaglio, F., Tourdot-Maréchal, R. and Guzzo, J. 2004. Typical metabolic traits of two Oenococcus oeni strains isolated from Valpollicella wines. Lett. Appl. Microbiol. 39 : 48-54.

## Revendications

1. Procédé pour moduler la coagulation et la synérèse du lait, **caractérisé en ce que** l'on ajoute dans le lait une protéine dite « Heat shock protein » (Hsp) préalablement ou pendant la coagulation.

2. Procédé selon la revendication 1, **caractérisé en ce que** la protéine dite « Heat shock protein» est choisie parmi les protéines « Heat shock protein » de faible masse moléculaire (small Hsp).

3. Procédé selon la revendication 2, **caractérisé en ce que** la protéine « Heat shock protein » de faible masse moléculaire est utilisée sous forme monomérique ou multimérique.

4. Procédé selon la revendication 3, **caractérisé en ce que** la protéine « Heat shock protein » de faible masse moléculaire est la protéine Lo18 de *Oenococcus oeni.*

5. Procédé selon l'une des revendications 1 à 4, **caractérisé en ce que** la protéine « Heat shock protein » est ajoutée au lait sous forme d'un extrait protéique purifié.

6. Procédé selon l'une des revendications 1 à 5, **caractérisé en ce que** la quantité de protéine ajoutée au lait va de 0,6 à 450 mg d'extrait protéique par litre de lait.

7. Procédé de préparation d'un sérum de lait comprenant une étape de coagulation, une étape de séparation du sérum et du caillé et une étape de récupération du sérum, **caractérisé en ce que** la coagulation est favorisée par l'ajout d'une protéine dite « Heat shock protein » selon l'une des revendications 1 à 6.

8. Procédé de préparation d'un caillé de lait comprenant une étape de coagulation, une étape de séparation du caillé et du sérum et une étape de récupération du caillé, **caractérisé en ce que** la coagulation est favorisée par l'ajout d'une protéine dite « Heat shock » selon l'une des revendications 1 à 6.

9. Procédé de préparation d'un fromage, comprenant une étape de préparation d'un caillé de lait et une étape d'égouttage du caillé, **caractérisé en ce que** l'on prépare le caillé par le procédé selon la revendication 8.

10. Procédé de préparation d'un fromage selon la revendication 9, **caractérisé en ce que** le caillé égoutté est ensuite affiné.

11. Fromage obtenu par le procédé selon l'une des revendications 9 ou 10, **caractérisé en ce que** la protéine dite « Heat shock protein» est choisie parmi les protéines « Heat shock protein » de faible masse moléculaire (small Hsp) selon l'une des revendications 2 à 4.
